# EUROPEAN PATENT APPLICATION

(11) **EP 2 674 740 A1**
(43) Date of publication of application: **18.12.2013**
(21) Application number: 12171782.1
(22) Date of filing: 13.06.2012
(51) Int. Cl.: G01M 5/00

(54) **A fatigue testing device for a wind turbine blade**

(71) Applicant: LM Wind Power A/S, 6000 Kolding (DK)
(72) Inventor: Usto, Edin, 5210 Odense NV (DK); Jensen, Jesper Thinggaard, 6000 Kolding (DK); Killick, David, 6000 Kolding (DK); Radhakrishnan, Sreeram Kottumuklu, 6000 Kolding (DK); Buxton, Michael, 59750 Åtvidaberg (SE)
(74) Representative: Hussey, Paul Anthony

(57) **Abstract**

A fatigue testing device or blade exciter is described for the application of cyclical loads to a relatively long wind turbine blade during blade testing. The fatigue testing device has two pairs of contra-rotating arms, with the axis of rotation located close to the surface of the blade under test, such that the rotational paths of the arms pass fore and aft of the wind turbine blade leading and trailing edges respectively. The use of contra-rotating arms allows for a reduction in the static weight of the exciter, while the positioning of the axis of rotation of the exciter close to the blade surface results in a reduced clearance height for the test apparatus, as well as a reduction in possible tipping or rocking forces during exciter operation.

## Description

### Field of the Invention

The present invention relates to a device for carrying out fatigue testing on a wind turbine blade.

### Background of the Invention

Wind turbine blades are subject to cyclical loading when in use. For accurate prediction of blade fatigue, such cyclical loading must be tested for each new design of wind turbine blade.

Current blade fatigue testing methods comprise mounting the root end of a wind turbine blade to a stationary test bed to form a cantilevered element, and subjecting the blade to a simulation of cyclical loading through excitation of the freestanding tip end of the blade. The excitation is normally carried out using one of two general configurations: either the use of a linear motion exciter (e.g. in the form of a hydraulic cylinder operable to perform a linear displacement of the tip end of the blade) or the use of a single rotating mass exciter mounted on the blade towards the tip end (e.g. a single rotating arm having a relatively heavy mass mounted to the free end of the arm).

However, as wind turbine blade designs continue to increase in dimensions, with current blade designs exceeding 70 metres in length, the energy and forces required to simulate the cyclical loading of such larger blades also increase. As a result, the use of traditional exciter designs presents new problems in the area of blade fatigue testing.

In the case of linear exciters, the increase in potential deflection distance of the relatively large blades means that larger linear exciters are required for effective fatigue testing. Accordingly, exciter cost and constructional difficulty increases.

For the rotational exciter case, as the larger blades require greater forces to effectively test for fatigue, accordingly the static weight of the exciter increases. It has been found that such an increase in exciter weight has lead to unintended results during testing, such as local crushing damage, as well as shear failure at the blade root.

Accordingly, it is an object of the invention to provide a blade exciter design which is of reduced weight and cost and is capable of creating high cyclical forces, which provides for easier and more effective fatigue testing of relatively large wind turbine blades.

### Summary of the Invention

Accordingly, there is provided a fatigue testing device for a wind turbine blade under test, the wind turbine blade comprising an airfoil profile body having a pressure side surface and a suction side surface, and a leading edge and a trailing edge having a chord line extending therebetween, the testing device comprising:
a frame for mounting to a surface of a wind turbine blade under test;
a first weighted arm mounted on a first rotatable axle coupled to said frame, said first weighted arm arranged to rotate along a first rotational path with said first axle;
a second weighted arm mounted on a second rotatable axle coupled to said frame, said second weighted arm arranged to rotate along a second rotational path with said second axle;
wherein the axis of rotation of said first axle is substantially parallel to the axis of rotation of said second axle, and
wherein said first weighted arm is arranged to rotate in an opposite direction to said second weighted arm, the rotation of the first and second weighted arms resulting in a cyclic excitation load to be transmitted through said frame to the wind turbine blade under test.

By using a pair of separate counter-rotating weighted arms, a greater dynamic excitation force can be generated for a given static weight of the testing device. It will be understood that an axle is taken to mean a rotational element to which a weighted arm may be attached. This may include an axle projecting from a driver motor or the like. Alternatively, the axle may comprise a relatively short flange provided as part of a driver motor. It will be understood that while the exciter may be used for the testing of any blade design, such an exciter is particularly suited for fatigue testing of relatively large wind turbine blades, e.g. in excess of 50 metres length.

Preferably, the fatigue testing device further comprises at least one driver operable to rotate said first axle in a first direction and to rotate said second axle in a second direction opposite to said first direction.

It will be understood that the device may comprise a single driver motor operable to drive a plurality of axles in respective rotation directions. Alternatively, the device may comprise a separate driver motor for each separate axle of the testing device.

Preferably, said at least one driver is controllable to adjust the rotational speed of at least one of said first and second axles.

Preferably, said first axle is coaxial with said second axle, such that said first and second weighted arms are arranged to contra-rotate.

The contra-rotation of the weighted arms provides the advantage of effective transmission of the dynamic forces to the blade under test, while balancing other out-of-plane forces generated by the rotating arms. Preferably, at least a portion of said second axle is provided within the interior of said first axle.

Preferably, said first and second axles comprise respective adjacent first ends and adjacent second ends, wherein said first and second weighted arms are located at said respective first ends of said first and second axles.

Preferably, the testing device further comprises a third weighted arm and a fourth weighted arm, wherein said third weighted arm is mounted on a third rotatable axle, said third axle coaxial with said first axle, said third weighted arm arranged to rotate along a third rotational path parallel to and in the same direction as said first rotational path, and said fourth weighted arm is mounted on a fourth rotatable axle, said fourth axle coaxial with said second axle, said fourth weighted arm arranged to rotate along a fourth rotational path parallel to and in the same direction as said second rotational path.

In one embodiment, the testing device is arranged such that said fourth rotatable axle is a continuation of said second rotatable axle, and wherein said fourth weighted arm is located at said second end of said second axle.

In a further embodiment, the testing device is arranged such that said third rotatable axle is a continuation of said first rotatable axle, said fourth rotatable axle is a continuation of said second rotatable axle, and wherein said third weighted arm and said fourth weighted arm are located at said respective second ends of said first and second axles.

By having two pairs of counter- or contra-rotating arms located at either ends of the axles, significant torsional loads are prevented from occurring due to the rotation of the arms.

In a preferred embodiment, the testing device is configured such that when said frame is mounted to a wind turbine blade under test, said first and second rotatable axles are substantially parallel to the chord line of the wind turbine blade under test.

In an alternative embodiment, the testing device is configured such that when said frame is mounted to a wind turbine blade under test, said first and second rotatable axles are substantially orthogonal to the chord line of the wind turbine blade under test.

Preferably, said testing device is arranged such that said respective first ends of said first and second axles are located towards the leading edge of a blade under test and said respective second ends of said first and second axles are located towards the trailing edge of a blade under test.

This helps to balance the testing device on the wind turbine blade under test, with an even distribution of the loads generated by the device.

Preferably, said first and second axles are arranged to be located proximate a surface of a wind turbine blade under test, such that at least a portion of the first and second rotational paths of said first and second weighted arms are located fore of the leading edge of the wind turbine blade under test, and such that at least a portion of the third and fourth rotational paths of said third and fourth weighted arms are located aft of the trailing edge of the wind turbine blade under test.

By providing the rotational axis of the axles relatively close to the surface of the blade under test, the ceiling clearance required for the testing of the blade is reduced. Furthermore, as the centre of gravity of the testing device is reduced, this helps to lower the tip-wise rocking load which is due to the pitch change as the blade deflects and curves. A further minor effect of the lowered device is that torsional loads will be reduced if there is any blade lateral movement.

Preferably, said first and second weighted arms comprise respective first ends located adjacent said respective first and second axles and respective distal second ends. Preferably, at least one of said first and second weighted arms comprises a projecting arm member arranged to receive a plurality of weight elements along the length of said projecting arm member.

Preferably, said weight elements are located towards the distal second ends of said weighted arms.

The use of such configurable arms allows for the distribution of weights on the arm to be varied, with according variation in the dynamic forces which can be applied to a blade under test.

Preferably, said projecting arm member is at least approximately 0.5 metres long, preferably at least 1 metre long, further preferably at least approximately 3 metres long.

Preferably, said projecting arm member comprises a plurality of coupling locations spaced along the length of the projecting arm member, wherein the location of weight elements along the length of said projecting arm member may be adjustable.

There is further provided a wind turbine fatigue test station, comprising:
a wind turbine test bench arranged to receive a wind turbine blade to be tested; and
a fatigue testing device, as described above, for mounting on a surface of a wind turbine blade to be tested when received by said test bench.

There is also provided a method of fatigue testing a wind turbine blade comprising:
applying a cyclic excitation force to a surface of a wind turbine blade, said force generated by at least two counter-rotating weights.

Preferably, the method further comprises the steps of:
providing a wind turbine blade under test at a fatigue test station;
mounting a fatigue testing device as described above to a surface of the wind turbine blade under test; and
applying said cyclic excitation force through rotation of the first and second weighted arms of the fatigue testing device.

There is further provided a fatigue testing device for a wind turbine blade under test, the wind turbine blade comprising an airfoil profile body having a pressure side surface and a suction side surface, and a leading edge and a trailing edge, the testing device comprising:
a frame for mounting to a surface of a wind turbine blade under test;
a first weighted arm mounted on a first rotatable axle coupled to said frame, said first weighted arm arranged to rotate along a first rotational path with said first axle;
wherein said first axle is arranged to be located proximate a surface of a wind turbine blade under test, such that at least a portion of said first rotational path of said first weighted arm is located forward of the leading edge or trailing edge of the wind turbine blade under test.

As the weighted arm is free to rotate forward of the leading edge or the trailing edge of the blade, the rotational axis of the axle can be provided relatively close to the surface of the blade under test. Accordingly, the ceiling clearance required for the testing of the blade is reduced. Furthermore, as the centre of gravity of the testing device is reduced, this helps to lower the tip-wise rocking load which is due to the pitch change as the blade deflects and curves. A further minor effect of the lowered device is that torsional loads will be reduced if there is any blade lateral movement.

It will be understood that an axle is taken to mean a rotational element to which a weighted arm may be attached. This may include an axle projecting from a driver motor or the like. Alternatively, the axle may comprise a relatively short flange provided as part of a driver motor.

Preferably, the testing device further comprises a second weighted arm mounted on a second rotatable axle coupled to said frame, said second weighted arm arranged to rotate along a second rotational path with said second axle, wherein said first axle and said second axle are arranged to be located proximate a surface of a wind turbine blade under test, such that at least a portion of said first rotational path of said first weighted arm is located forward of the leading edge of the wind turbine blade under test, and that at least a portion of said second rotational path of said second weighted arm is located aft of the trailing edge of the wind turbine blade under test; and
wherein said first weighted arm is arranged to rotate in an opposite direction to said second weighted arm, the rotation of the first and second weighted arms resulting in a cyclic excitation load to be transmitted through said frame to the wind turbine blade under test.

By having a pair of counter-rotational masses located at either side of the blade under test, a blade torsional load is not introduced into the testing procedure. Furthermore, by using a pair of separate counter-rotating weighted arms, a greater dynamic excitation force can be generated for a given static weight of the testing device.

Preferably, said second axle is substantially coaxial with said first axle.

Preferably, the fatigue testing device further comprises at least one driver operable to rotate said first axle in a first direction and to rotate said second axle in a second direction opposite to said first direction.

It will be understood that the device may comprise a single driver motor operable to drive a plurality of axles in respective rotation directions. Alternatively, the device may comprise a separate driver motor for each separate axle of the testing device.

Preferably, said at least one driver is controllable to adjust the rotational speed of at least one of said first and second axles.

Preferably, said first axle is coaxial with said second axle, such that said first and second weighted arms are arranged to contra-rotate.

The contra-rotation of the weighted arms provides the advantage of effective transmission of the dynamic forces to the blade under test, while balancing other out-of-plane forces generated by the rotating arms.

In a preferred embodiment, the testing device further comprises:
a third weighted arm mounted on a third rotatable axle coupled to said frame, said third weighted arm arranged to rotate along a third rotational path with said third axle, and
a fourth weighted arm mounted on a fourth rotatable axle coupled to said frame, said fourth weighted arm arranged to rotate along a fourth rotational path with said fourth axle,
wherein said third rotatable axle is coaxial with said first rotatable axle, said third weighted arm located adjacent said first weighted arm and arranged to contra-rotate with said first weighted arm, and
wherein said fourth rotatable axle is coaxial with said second rotatable axle, said fourth weighted arm located adjacent said second weighted arm and arranged to contra-rotate with said second weighted arm,

Preferably, said testing device is arranged such that at least a portion of said third rotational path of said third weighted arm is located forward of the leading edge of the wind turbine blade under test, and at least a portion of said fourth rotational path of said fourth weighted arm is located aft of the trailing edge of the wind turbine blade under test.

By having two pairs of counter- or contra-rotating arms located at either ends of the axles, significant torsional loads are prevented from occurring due to the rotation of the arms. This helps to balance the testing device on the wind turbine blade under test, with an even distribution of the loads generated by the device.

Preferably, said weighted arms respectively comprise a first end located adjacent said respective rotatable axle and a distal second end. Preferably, at least one of said weighted arms comprises a projecting arm member arranged to receive a plurality of weight elements along the length of said projecting arm member.

Preferably, said weight elements are located towards the distal second ends of said weighted arms.

The use of such configurable arms allows for the distribution of weights on the arm to be varied, with according variation in the dynamic forces which can be applied to a blade under test.

Preferably, said projecting arm member is at least approximately 0.5 metres long, preferably at least 1 metre long, further preferably at least approximately 3 metres long.

Preferably, said projecting arm member comprises a plurality of coupling locations spaced along the length of the projecting arm member, wherein the location of weight elements along the length of said projecting arm member may be adjustable.

There is further provided a wind turbine fatigue test station, comprising:
a wind turbine test bench arranged to receive a wind turbine blade to be tested; and
a fatigue testing device, as described above, for mounting on a surface of a wind turbine blade to be tested when received by said test bench.

There is also provided a method of fatigue testing a wind turbine blade comprising:
applying a cyclic excitation force to a surface of a wind turbine blade, said force generated by at least two counter-rotating weights.

Preferably, the method further comprises the steps of:
providing a wind turbine blade under test at a fatigue test station;
mounting a fatigue testing device as described above to a surface of the wind turbine blade under test; and
applying said cyclic excitation force through rotation of the first and second weighted arms of the fatigue testing device.

### Description of the Invention

An embodiment of the invention will now be described, by way of example only, with reference to the accompanying drawings, in which:
Fig. 1 shows a wind turbine;
Fig. 2 shows a schematic view of a wind turbine blade;
Fig. 3 shows a schematic view of an airfoil profile of the blade of Fig. 2;
Fig. 4 shows a section of a wind turbine blade having a fatigue testing device according to an embodiment of the invention mounted to a surface of the blade;
Fig. 5 shows an enlarged perspective view of the fatigue testing device of Fig. 4 when isolated from a wind turbine blade;
Fig. 6 shows a side plan view of the fatigue testing device of Fig. 4;
Fig. 7 shows a top plan view of the fatigue testing device of Fig. 7; and
Fig. 8 shows the fatigue testing device of Fig. 4 when seen from the tip end of the wind turbine blade.

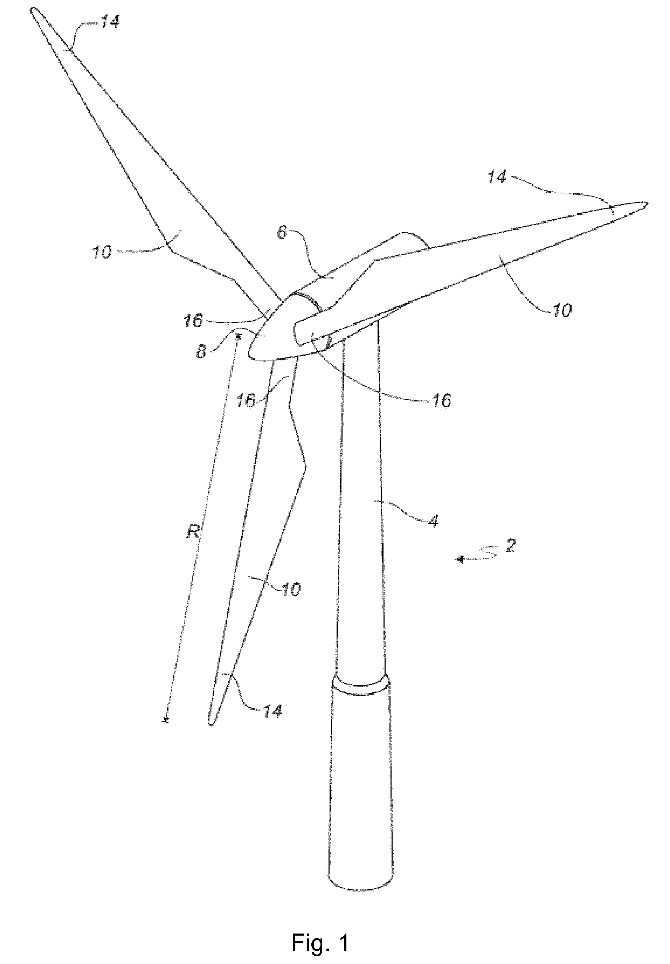

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

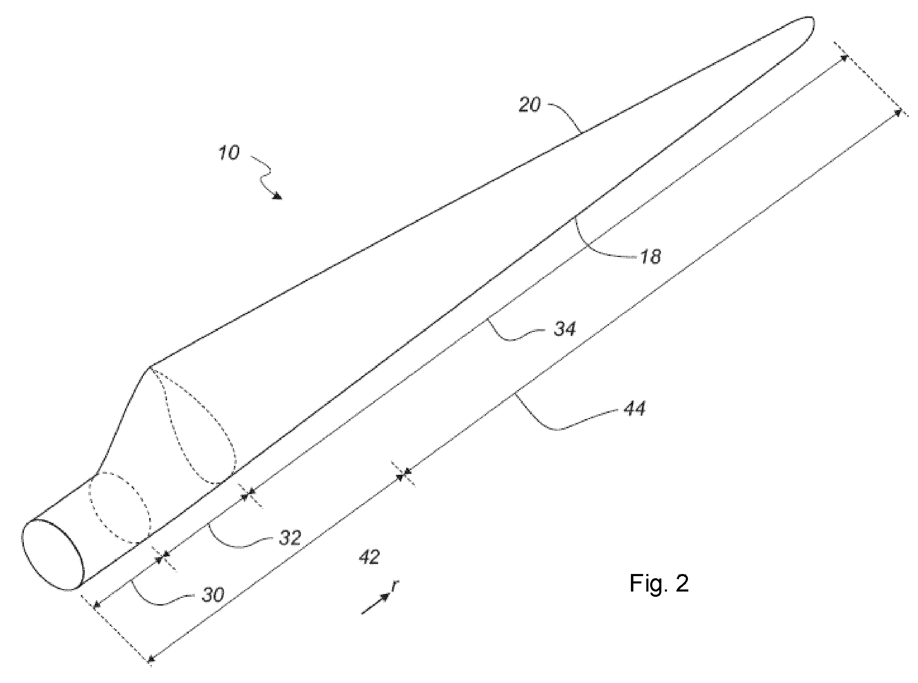

Fig. 2 shows a schematic view of a first embodiment of a wind turbine blade 10 which may be used according to an embodiment of the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 is typically constant along the entire root area 30. The transition region 32 has a transitional profile 42 gradually changing from the circular or elliptical shape of the root region 30 to the airfoil profile 50 of the airfoil region 34. The chord length of the transition region 32 typically increases substantially linearly with increasing distance r from the hub.

The airfoil region 34 has an airfoil profile 50 with a chord extending between the leading edge 18 and the trailing edge 20 of the blade 10. The width of the chord decreases with increasing distance r from the hub.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

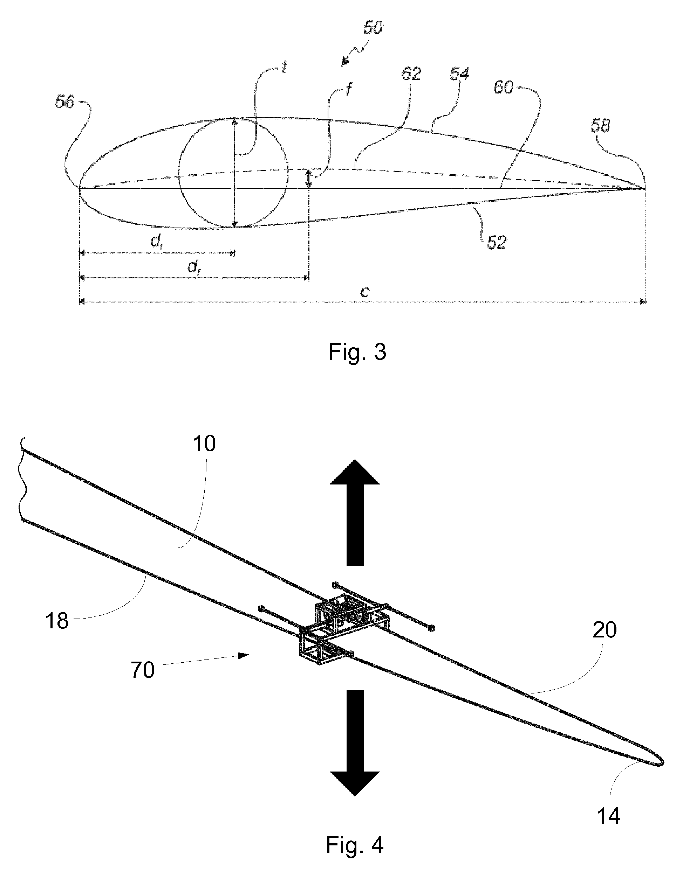

Fig. 3 shows a schematic view of an airfoil profile 50 of a typical blade of a wind turbine depicted with the various parameters which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber and lower camber, which are defined as the distances from the chord 60 and the suction side 54 and pressure side 52, respectively.

Airfoil profiles are often characterised by the following parameters: the chord length c, the maximum camber f, the position df of the maximum camber f, the maximum airfoil thickness t, which is the largest diameter of the inscribed circles along the median camber line 62, the position dt of the maximum thickness t, and a nose radius (not shown). These parameters are typically defined as ratios to the chord length c.

Wind turbine blades are generally formed from fibre-reinforced plastics material, i.e. glass fibres and/or carbon fibres which are arranged in a mould and cured with a resin to form a solid structure. Modem wind turbine blades can be in excess of 50 metres in length, having blade root diameters of several metres, with current longest wind turbine blades exceeding 70 metres in length.

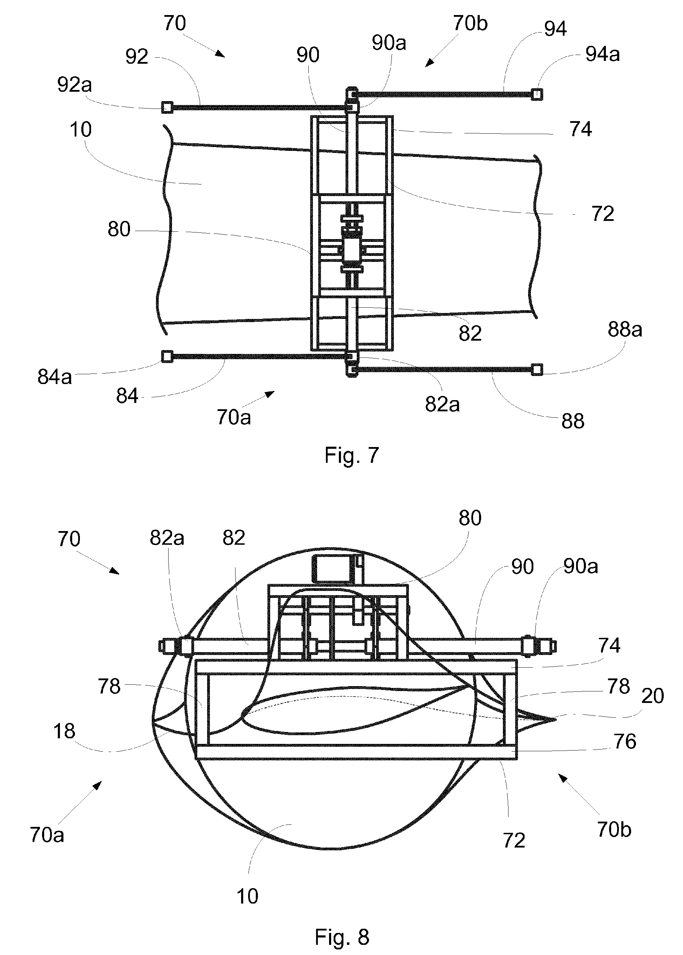

As wind turbine production moves towards wind turbine blades having increased length, suitable fatigue testing devices are required to provide for accurate and efficient testing of dynamic loads on such relatively large structures. With reference to Figs. 4-8, a fatigue testing device according to the invention is indicated at 70, when mounted to a surface of a wind turbine blade 10, at a location towards the tip end 14 of the blade 10. The device 70 is operable to apply a cyclically varying lateral force to the blade body, to excite the blade in the direction of the arrows shown. Such a force, repeated over time, allows for a relatively accurate simulation of real life operational fatigue loads on a wind turbine blade.

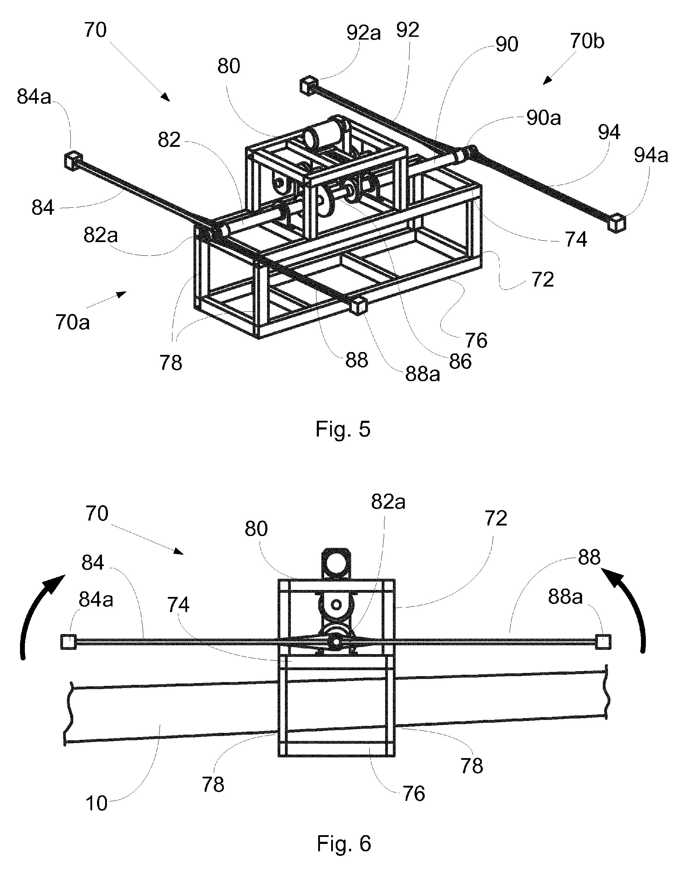

The fatigue testing device 70 is shown in an enlarged perspective view in Fig. 5. The device comprises a frame body 72 which is adapted to be fitted to a wind turbine blade 10. The frame body 72 comprises a substantially rectangular upper frame 74 and a corresponding lower frame 76, with a plurality of frame arms 78 extending therebetween, the upper and lower frames 74,76 and the frame arms 78 defining an open passage, through which the body of a wind turbine blade 10 may be positioned. It will be understood that the frame body 72 may comprise a blade form or spacer (not shown) provided in said internal passage which corresponds to the airfoil contour profile at that point along the length of the blade it is desired to mount the device 70. Such a spacer or from allows for a secure fit of the frame body 72 to the body of a wind turbine blade under test. The fatigue testing device 70 comprises a leading edge side 70a and a trailing edge side 70b, wherein when the device 70 is mounted to a wind turbine blade, said leading edge side 70a is located at the leading edge 18 of the blade 10 and the trailing edge side 70b is located at the trailing edge 20 of the blade 10.

A driver unit 80 comprising at least one motor is provided on said upper frame 74, wherein the driver unit 80 is coupled to a first axle 82 extending from said driver unit 80 to a first end 82a provided at the leading edge side 70a of the device 70. A first weighted arm member 84 is mounted to said first axle 82 at said first end 82a, said first weighted arm member 84 extending orthogonally from the central rotational axis of the first axle 82, to a free distal end 84a.

The driver unit 80 is further coupled to a second axle 86, which is coaxial with said first axle 82, and extends from said driver unit 80 through the interior of said fist axle 82 to said first end 82a provided at the leading edge side 70a of the device 70. A second weighted arm member 88 is mounted to said second axle 86 at said first end 82a, said second weighted arm member 88 extending orthogonally from the central rotational axis of the second axle 86, to a free distal end 88a.

At the opposite side of the fatigue testing device 70, the driver unit 80 is further coupled to a third axle 90, which extends from said driver unit 80 to a second end 90a provided at the trailing edge side 70b of the device 70. A third weighted arm member 92 is mounted to said third axle 90 at said second end 90a, said third weighted arm member 92 extending orthogonally from the central rotational axis of the third axle 90, to a free distal end 92a.

The device 70 is further provided with a fourth axle coupled to said driver unit 80, said fourth axle coaxial with said third axle 90, and which extends from said driver unit 80 through the interior of said third axle 90 to said second end 90a provided at the trailing edge side 70b of the device 70. A fourth weighted arm member 94 is mounted to said fourth axle at said second end 90a, said fourth weighted arm member 94 extending orthogonally from the central rotational axis of the fourth axle, to a free distal end 94a.

In the embodiment shown in Fig. 5, said fourth axle is formed as a continuation of said second axle 86, which extends from said first end 82a provided on the leading edge side 70a of the device 70 to said second end 90a provided on the trailing edge side 70b of the device 70.

It will be understood that a configurable weight element may be provided at said distal ends 84a,88a,92a,94a, wherein the weight of the weight element may be selected based on the excitation forces it is desired to be generated.

With reference to Fig. 6, the driver unit 80 is operable to rotate said first, second, third and fourth weighted arms 84,88,92,94 in the direction indicated by the arrows such that said first and second weighted arms 84,88 form a first contra-rotating pair of weighted arms provided at the leading edge side 70a and such that said third and fourth weighted arms 92,94 form a second contra-rotating pair of weighted arms provided at the trailing edge side 70b. It will be understood that the rotation of said arms 84,88,92,94 is synchronised, such each of the first, second, third and fourth weighted arms 84,88,92,94 reach the upper and lower points of their respective rotational paths, i.e. along the vertical axis, at the same time.

The use of contra-rotating weighted arms ensures that the device 70 is laterally balanced, while operable to induce significant excitation forces to be transferred to a wind turbine blade under test. The use of relatively long arms having weighted elements provided at the distal ends of the arms provides a relatively light-weight construction, which reduces the static loads involved in the mounting of the device to the surface of a wind turbine blade.

In a preferred embodiment, said weighted arms 84,88,92,94 are at least 3.25 metres in length, wherein the weighted elements provided at the distal ends of said arms are at least 44 kg. Such dimensions provide suitable excitation forces for an 80-metre-long blade, and provide a considerable weight saving on previous blade exciter designs.

With reference to Figs. 6-8, the first-fourth axles 82,86,90 are extended such that when the device 70 is mounted to a blade 10 under test, the first and second ends 82a,90a project beyond the leading and trailing edge 18,20 respectively of the blade. Accordingly, at least a portion of the rotational path of the first and second weighted arms 84,88 pass fore of the leading edge 18 of the blade 10, while at least a portion of the rotational path of the third and fourth weighted arms 92,94 pass aft of the blade trailing edge 20.

This configuration allows for the central axis of rotation of the axles 82,86,90 to be located close to the surface of the blade 10 under test. Such an arrangement means that the centre of gravity of the device 70 is located close to the blade 10, and any tip-wise rocking forces are reduced, resulting in a more accurate test for blade lateral deflection. Furthermore, the reduced height of the device 70 when mounted to the blade 10 results in a reduction in the clearance height required for the testing operation.

It will be understood that the lowered rotational axis configuration may be implemented using any suitable configuration of exciter device, e.g. with at least one rotating weighted arm member, preferably at least two rotating weighted arm members - a first arm member located at the leading edge side of the device and a second weighted arm member located at the trailing edge side of the device, so that a blade torsional load is not introduced.

It will be further understood that the concept of the contra-rotating weighted arms may be implemented in any suitable blade fatigue testing device having at least two weighted arms.

In use, a wind turbine blade 10 under test is mounted to a suitable test bed, by coupling the root end 16 of the blade to a root end mounting plate, such that the chord line of the blade is substantially parallel to the ground surface of the test bed, allowing for flapwise excitation of the blade.

The fatigue testing device 70 may then be mounted to the blade under test, at a suitable location along the length of the blade towards the tip end of the blade. It will be understood that the fatigue testing device 70 may be slid onto the blade 10, by passing the tip end 14 of the blade through the internal passage provided in the frame body 72 of the device 70. Alternatively, the frame body of the fatigue testing device 70 may be provided in two parts, which can be assembled together on the wind turbine blade 10 at the point to which the device 70 is to be mounted, thus removing the requirement that the device 70 is slid over a portion of the blade from the blade tip end 14. Further alternatively, the frame arms 78 provided at either the leading edge side 70a or the trailing edge side 70b of the device 70 may be hinged to allow the passage of the blade body into the internal passage of the frame body 72 once said arms are hinged to an open position, after which the arms may be hinged to a closed position and the device 70 secured to the blade 10.

Once the device 70 is mounted to the blade 10 under test, the driver unit 80 is actuated to apply a rotational force to the device axles 82,86,90, to rotate the weighted arms 84,88,92,94. The contra-rotation of the arms provided at the leading edge side 70a and the trailing edge side 70b of the device results in a flapwise excitation force applied to the wind turbine blade 10 under test which is laterally balanced, and with minimal tipwise rocking forces or torsional effects. This excitation may be repeated over a large number of cycles of the weighted arms to provide an adequate simulation of blade fatigue loads experienced during the blade operational lifetime.

It will be understood that the driver unit 80 of the device may comprise a plurality of separate driver motors operable to apply separate rotational forces to the device axles. Furthermore, it will be understood that the device may comprise a plurality of device axles to which the weighted arms are mounted. While it is preferred that the axles of the device are coaxial, to provide for contra-rotation and a compensation of torsional forces, it will be understood that any suitable configuration of axles may be used.

While the device shown in Figs. 4-6 is mounted such that the axis of rotation of the weighted arms of the device is substantially parallel to the upper surface of the wind turbine blade 10 under test to provide for a flapwise excitation of the blade 10, it will be understood that any suitable orientation of the device 70 may be used. For example, the device may be rotated through approximately 90 degrees, such that the axis of rotation of the device arms is orthogonal to the chord line of the blade, i.e. substantially parallel to the leading edge 18 of the blade 10, to provide for an edgewise excitation of the blade 10.

It will further be understood that the weighted arms 84,84,92,94 of the device 70 may be arranged to receive weight elements at different points along the length of the arms, to allow for variable configurations of weights, and to allow for different excitation forces to be applied to the blade 10.

It will be understood that the individual features of the embodiment of exciter described above may be separately implemented in an exciter design, e.g. the feature of the counter-rotating arms may be implemented on an exciter wherein the rotational path of the arms does not extend beyond the leading or trailing edge of the blade under test.

Through the use of the above described fatigue testing device, an efficient and lightweight blade exciter is provided, having a reduced ceiling clearance height, suitable for use in the fatigue testing of relatively long wind turbine blades.

The invention is not limited to the embodiment described herein, and may be modified or adapted without departing from the scope of the present invention.

## Claims

1. A fatigue testing device for a wind turbine blade under test, the wind turbine blade comprising an airfoil profile body having a pressure side surface and a suction side surface, and a leading edge and a trailing edge having a chord line extending therebetween, the testing device comprising:
a frame for mounting to a surface of a wind turbine blade under test;
a first weighted arm mounted on a first rotatable axle coupled to said frame, said first weighted arm arranged to rotate along a first rotational path with said first axle;
a second weighted arm mounted on a second rotatable axle coupled to said frame, said second weighted arm arranged to rotate along a second rotational path with said second axle;
wherein the axis of rotation of said first axle is substantially parallel to the axis of rotation of said second axle, and
wherein said first weighted arm is arranged to rotate in an opposite direction to said second weighted arm, the rotation of the first and second weighted arms resulting in a cyclic excitation load to be transmitted through said frame to the wind turbine blade under test.

2. The fatigue testing device of claim 1, wherein the fatigue testing device further comprises at least one driver operable to rotate said first axle in a first direction and to rotate said second axle in a second direction opposite to said first direction.

3. The fatigue testing device of claim 2, wherein said at least one driver is controllable to adjust the rotational speed of at least one of said first and second axles.

4. The fatigue testing device of any one of claims 1-3, wherein said first axle is coaxial with said second axle, such that said first and second weighted arms are arranged to contra-rotate.

5. The fatigue testing device of any one of claims 1-4, wherein said first and second axles comprise respective adjacent first ends and adjacent second ends, wherein said first and second weighted arms are located at said respective first ends of said first and second axles.

6. The fatigue testing device of any one of claims 1-5, wherein the testing device further comprises a third weighted arm and a fourth weighted arm, wherein said third weighted arm is mounted on a third rotatable axle, said third axle coaxial with said first axle, said third weighted arm arranged to rotate along a third rotational path parallel to and in the same direction as said first rotational path, and said fourth weighted arm is mounted on a fourth rotatable axle, said fourth axle coaxial with said second axle, said fourth weighted arm arranged to rotate along a fourth rotational path parallel to and in the same direction as said second rotational path.

7. The fatigue testing device of claim 6, wherein the testing device is arranged such that said fourth rotatable axle is a continuation of said second rotatable axle, and wherein said fourth weighted arm is located at the second end of said second axle.

8. The fatigue testing device of any one of claims 1-7, wherein the testing device is configured such that when said frame is mounted to a wind turbine blade under test, said first and second rotatable axles are substantially parallel to the chord line of the wind turbine blade under test.

9. The fatigue testing device of any one of claims 1-8, wherein said testing device is arranged such that said respective first ends of said first and second axles are located towards the leading edge of a blade under test and said respective second ends of said first and second axles are located towards the trailing edge of a blade under test.

10. The fatigue testing device of any one of claims 1-9, wherein said first and second axles are arranged to be located proximate a surface of a wind turbine blade under test, such that at least a portion of the first and second rotational paths of said first and second weighted arms are located fore of the leading edge of the wind turbine blade under test, and such that at least a portion of the third and fourth rotational paths of said third and fourth weighted arms are located aft of the trailing edge of the wind turbine blade under test.

11. The fatigue testing device of any one of claims 1-7, wherein the testing device is configured such that when said frame is mounted to a wind turbine blade under test, said first and second rotatable axles are substantially orthogonal to the chord line of the wind turbine blade under test.

12. The fatigue testing device of any one of claims 1-11, wherein at least one of said first and second weighted arms comprises a projecting arm member arranged to receive a plurality of weight elements along the length of said projecting arm member.

13. A wind turbine fatigue test station, comprising:
a wind turbine test bench arranged to receive a wind turbine blade to be tested; and
a fatigue testing device as claimed in any one of claims 1-12 for mounting on a surface of a wind turbine blade to be tested when received by said test bench.

14. A method of fatigue testing a wind turbine blade comprising:
applying a cyclic excitation force to a surface of a wind turbine blade, said force generated by at least two counter-rotating weights.

15. The method as claimed in claim 14, wherein the method further comprises the steps of:
providing a wind turbine blade under test at a fatigue test station;
mounting a fatigue testing device as claimed in any one of claims 1-12 to a surface of the wind turbine blade under test; and
applying said cyclic excitation force through rotation of the first and second weighted arms of the fatigue testing device.
